(19) 

Europäisches
Patentamt
European
Patent Office
Office européen
des brevets

(11)  **EP 4 545 277 A1**

(12)  **EUROPEAN PATENT APPLICATION**
published in accordance with Art. 153(4) EPC

(43) Date of publication:
**30.04.2025  Bulletin 2025/18**

(21) Application number: **23826562.3**

(22) Date of filing: **21.06.2023**

(51) International Patent Classification (IPC):
**B29C 64/277** (2017.01)   **H05B 45/30** (2020.01)

(52) Cooperative Patent Classification (CPC):
Y02B 20/40

(86) International application number:
**PCT/CN2023/101906**

(87) International publication number:
**WO 2023/246917 (28.12.2023 Gazette 2023/52)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **23.06.2022  CN 202210719563**

(71) Applicant: **Guangzhou Heygears IMC. Inc
Guangzhou, Guangdong 510663 (CN)**

(72) Inventors:
• **LIANG, Yuhao
  Guangzhou, Guangdong 510663 (CN)**
• **WAN, Xin
  Guangzhou, Guangdong 510663 (CN)**
• **DING, Peng
  Guangzhou, Guangdong 510663 (CN)**

(74) Representative: **De Clercq & Partners
Edgard Gevaertdreef 10a
9830 Sint-Martens-Latem (BE)**

(54)  **THREE-DIMENSIONAL PRINTING DEVICE AND LIGHT SOURCE CONTROL METHOD AND
APPARATUS THEREFOR**

(57)    The present disclosure relates to the technical field of light source control, and provides a three-dimensional printing device and a light source controlling method and mechanism thereof. The three-dimensional printing device comprises a selective light-transmitting display, a light source comprises a plurality of LED lamp sets, and the method for controlling the light source comprises: supplying currents to the plurality of LED lamp sets; obtaining a plurality of first illumination data of light emitted by the LED lamp sets and passing through the selective light-transmitting display; and adjusting a driving current of a corresponding LED lamp set according to a relationship between the plurality of pieces of first illumination data, to make the first illumination data of the plurality of LED lamp sets consistent. The three-dimensional printing device and the light source controlling method and mechanism thereof provided by the present disclosure have the advantages that the stability is higher, the light emitting consistency is better, and the service life of the selective light-transmitting display is prolonged.

Fig. 6

Supplying currents to the plurality of LED lamp sets — S102

Obtaining a plurality of first illumination data of light emitted by the LED lamp sets and passing through the selective light-transmitting display — S104

Adjusting a driving current of a corresponding LED lamp set according to a relationship between the plurality of first illumination data, to make the first illumination data of the plurality of LED lamp sets consistent — S106

**EP 4 545 277 A1**

Processed by Luminess, 75001 PARIS (FR)

## Description

The present disclosure claims priority to Chinese Patent Application No. 202210719563.0, filed to the China National Intellectual Property Administration on 23 June 2022 and entitled "Three-Dimensional Printing Device and Light Source Controlling Method and Mechanism Thereof", which is incorporated herein by reference in its entirety.

## Technical Field

The present disclosure relates to the technical field of light source control, and in particular, to a three-dimensional printing device and a light source controlling method and mechanism thereof.

## Background

At present, there are many types of 3D printing technologies on the market, which mainly differ in the laminating method and the used material according to different incremental processes, such as a Stereo lithography Apparatus (SLA), an extruded Fused Deposition Modelling (FDM), a granular Selective Laser Sintering (SLS), a Laminated Object Manufacturing (LOM), and photopolymerized Digital Light Processing (DLP).

In related art, LCD masking has been developed for use in 3D printing. The earliest makers use an ordinary computer Liquid Crystal Display (LCD), removes the display backlight source, and adds 405nm Ultra Violet (UV) LED lamp beads as the backlight source, to achieve the photocuring 3D printing with LCD. However, the current LCD 3D printing technology still has some disadvantages, and it is difficult to meet the use requirements of users.

## Summary

The objective of the present disclosure is to provide a three-dimensional printing device and a light source controlling method and mechanism thereof, so as to solve the problem that the service life of a selective light-transmitting display in the three-dimensional printing device is not long.

In order to achieve the described objective, the embodiments of the present disclosure adopt the following technical solutions:

According to a first aspect, an embodiment of the present disclosure provides a method for controlling a light source of a three-dimensional printing device, the three-dimensional printing device comprises a selective light-transmitting display, the light source comprises a plurality of LED lamp sets, and the method for controlling the light source comprises:

supplying currents to the plurality of LED lamp sets;

Obtaining a plurality of first illumination data of light emitted by the plurality of LED lamp sets and passing through the selective light-transmitting display; and

adjusting the driving currents of the plurality of LED lamp sets according to a relationship between the plurality of first illumination data, to make the plurality of the first illumination data of the plurality of LED lamp sets consistent.

As at least one alternative embodiment, the plurality of first illumination data comprise a plurality of first illumination intensities, and adjusting driving currents of the plurality of LED lamp sets according to a relationship between the plurality of first illumination data, to make the plurality of first illumination data of the plurality of LED lamp sets consistent comprises:

when at least some of the plurality of first illumination intensities of the plurality of first illumination data are not equal, increasing a driving current of an LED lamp set with a lower first illumination intensity among the plurality of first illumination intensities, and/or decreasing a driving current of an LED lamp set with a higher first illumination intensity among the plurality of first illumination intensities, so as to decrease a difference value between the plurality of first illumination intensities.

As at least one alternative embodiment, supplying driving currents to the plurality of LED lamp sets comprises: providing a constant current to the plurality of LED lamp sets; the method for controlling the light source further comprises:

obtaining second illumination data of light emitted by the plurality of LED lamp sets and passing through the selective light-transmitting display; and

adjusting the constant current according to a relationship between the second illumination data and preset illumination data, to make the second illumination data consistent with the preset illumination data.

As at least one alternative embodiment, the second illumination data comprises a second illumination intensity, the preset illumination data comprises a preset illumination intensity, and wherein adjusting the constant current according to the relationship between the second illumination data and preset illumination data, to make the second illumination data consistent with the preset illumination data comprises:

increasing the constant current when the second illumination intensity of the second illumination data is lower than the preset illumination intensity of the preset illumination data, so as to reduce a difference value between the second illumination intensity and the preset illumination intensity.

As at least one alternative embodiment, the method further comprises:

receiving, at least once, at least one of the plurality of first illumination data and the second illumination data;

after receiving the plurality of first illumination data, adjusting the driving currents of the plurality of LED lamp sets according to the relationship between the plurality of first illumination data of the plurality of LED lamp sets; and

after receiving the second illumination data, adjusting the constant current according to the relationship between the second illumination data and the predetermined illumination data.

As at least one alternative embodiment, the method further comprises:

obtaining light decay data of the plurality of LED lamp sets; and

adjusting at least one of the constant current and the driving currents according to the light decay data, to make the plurality of first illumination data of the plurality of LED lamp sets consistent, and/or to make the second illumination data consistent with the preset illumination data.

As at least one alternative embodiment, each of the plurality of LED lamp sets comprises a plurality of LEDs, or each of the plurality of LED lamp sets comprises one LED.

According to a second aspect, an embodiment of the present disclosure further provides a light source controlling mechanism, applied to a three-dimensional printing device, the light source controlling mechanism comprising:

a selective light-transmitting display, configured to selectively allow a light to pass;

a light source, comprising a plurality of LED lamp sets, wherein the plurality of LED lamp sets are configured to emit light to the selective light-transmitting display;

a power supply, electrically connected to the light source and configured to provide driving currents to the plurality of LED lamp sets;

a current adjustment mechanism, electrically connected to each of the plurality of LED lamp sets and configured to adjust a driving current of a corresponding LED lamp set according to a relationship between a plurality of first illumination data of the plurality of LED lamp sets, to make the plurality of first illumination data of the plurality of LED lamp sets consistent;

wherein the plurality of first illumination data are illumination data of the light projected by the plurality of LED lamp sets and passing through the selective light-transmitting display.

As at least one alternative embodiment, the apparatus further comprises a light detection mechanism, wherein the light detection mechanism is configured to detect the plurality of first illumination data of the light projected by the plurality of LED lamp sets and passing through the selective light-transmitting display.

As at least one alternative embodiment, the light detection mechanism comprises at least one of: a photosensitive resistor, a photodiode, a photosensor, a photometer, an integrating sphere or a camera.

As at least one alternative embodiment, each of the plurality of LED lamp sets comprises a plurality of LEDs, or each of the plurality of LED lamp sets comprises one LED.

As at least one alternative embodiment, the power supply is a constant current source and is configured to provide a constant current to the plurality of LED lamp sets.

As at least one alternative embodiment, when the light source controlling mechanism comprises a plurality of power supplies, the number of the plurality of power supplies is equal to the number of the plurality of LED lamp sets, and the plurality of power supplies are electrically connected to the plurality of LED lamp sets in a one-to-one correspondence.

As at least one alternative embodiment, the light source is a COB light source, and each of the plurality of LED lamp sets comprises a COB chip.

According to a third aspect, an embodiment of the present disclosure further provides a three-dimensional printing device, comprising a material tray, a forming platform, and the light source controlling mechanism, wherein he material tray is configured to hold a printing material, and the printing material is configured to be formed layer by layer on the forming platform under the irradiation of the light source, so as to obtain a printed object.

Compared with the prior art, the embodiments of the present disclosure have the following beneficial effects.

Provided are a three-dimensional printing device and a light source controlling method and mechanism thereof. On one hand, a driving current of each LED lamp set is precisely and independently adjusted by means of a current adjustment mechanism according to first illumination intensity data of various LED lamp sets, so as to achieve independent and precise control over a single LED or LEDs in a region, and further make first illumination data of the LED lamp sets consistent by means of feedback, so that the consistence of emergent light is better, the independence and accuracy of adjustment are higher, and thus the light consistency of a light source at a projection surface can be improved; on the other hand, by adjusting the light consistency in this manner, compared with the manner of achieving uniform light by selecting a selectively light-transmitting display in the related art, it is not necessary or only a small amount of the pixels in the selectively light-transmitting display need to absorb the ultraviolet light emitted by the light source, so that the aging time of the adhesive in the selective light-transmitting display can be greatly prolonged to some extent, thereby prolonging the service life of the selective light-transmitting display; in still another aspect, compared with the described related art, it is not necessary to absorb UV light by means of the selective light-transmitting display to perform light consistency, so that the light flux of the selective light-transmitting display can be improved to a certain extent, the light transmittance of the selective light-transmitting display is further improved, and the printing quality of the three-dimensional printing device is improved.

In order to make the purposes, features and advantages of the present disclosure more obvious and understandable, detailed description will be made below in combination with exemplary embodiments with reference to the drawings.

### Brief Description of the Drawings

In order to more clearly illustrate the technical solutions of the present disclosure, drawings which need to be used therein will be introduced below briefly. It should be understood that the drawings below merely show some embodiments of the present disclosure, and therefore should not be considered as limitation to the scope. Those ordinarily skilled in the art still could obtain other relevant drawings according to these drawings, without using any creative efforts.

Fig. 1 is a schematic structural diagram of a three-dimensional printing device according to an embodiment of the present disclosure.

Fig. 2 is a schematic diagram of a first module of a light source controlling mechanism according to an embodiment of the present disclosure.

Fig. 3 is a schematic circuit diagram of a light source according to an embodiment of the present disclosure.

Fig. 4 is another schematic circuit diagram of a light source according to an embodiment of the present disclosure.

Fig. 5 is a schematic diagram of a second module of a light source controlling mechanism according to an embodiment of the present disclosure.

Fig. 6 is an exemplary flowchart of a method for controlling a light source of a three-dimensional printing device according to an embodiment of the present disclosure.

Fig. 7 is a schematic diagram of a third module of a light source controlling mechanism according to an embodiment of the present disclosure.

Fig. 8 is a schematic diagram of a fourth module of a light source controlling mechanism according to an embodiment of the present disclosure.

Fig. 9 is a schematic diagram of positions of an LED lamp set, a selective light-transmitting display and a light detection mechanism according to an embodiment of the present disclosure.

Fig. 10 is a schematic diagram of a fifth module of a light source controlling mechanism according to an embodiment of the present disclosure.

Fig. 11 is another exemplary flowchart of a method for controlling a light source of a three-dimensional printing device according to an embodiment of the present disclosure.

Fig. 12 is another exemplary flowchart of a method for controlling a light source of a three-dimensional printing device according to an embodiment of the present disclosure.

In the drawings:
100: light source controlling mechanism; 110: power supply; 120: light source; 121: LED lamp set; 130: current adjustment mechanism; 140: selective light-transmitting display; 150: control mechanism; 160: light detection mechanism; 170: communication interface; 200: three-dimensional printing device; 210: forming platform; 220: material tray; 230: chassis.

## Detailed Description of the Embodiments

To make the objects, technical solutions, and advantages of the embodiments of the present disclosure clearer, hereinafter, the technical solutions in the embodiments of the present disclosure will be described clearly and thoroughly with reference to the accompanying drawings of the embodiments of the present disclosure. Obviously, the embodiments as described are some of the embodiments of the present disclosure, and are not all of the embodiments of the present disclosure. Generally, components in the embodiments of the present disclosure, as described and shown in the drawings herein, are capable of being arranged and designed in a variety of different configurations.

Therefore, the detailed description below of the embodiments of the present disclosure provided in the drawings is not intended to limit the scope of the present disclosure, but merely illustrates chosen embodiments of the present disclosure. All other embodiments obtained by a person of ordinary skill in the art on the basis of the embodiments of the present disclosure without any inventive effort shall all fall within the scope of protection of some embodiments of the present disclosure.

In the description of the present disclosure, it should be noted that, unless stated and limited otherwise, terms "arrange" and "connection" should be understood in broader sense. For example, connection may be a fixed connection, a removable connection, or an integrated connection, may be a mechanical connection, an electrical connection, and may be a direct connection, an indirect connection through a medium, or a communication connection between two components, unless limited otherwise. For those of ordinary skill in the art, the specific meanings of the above terms in the present disclosure can be understood according to specific situations.

Some embodiments of the present disclosure will be described in detail below with reference to the accompanying drawings. The following embodiments and the features in the embodiments can be combined without conflicts.

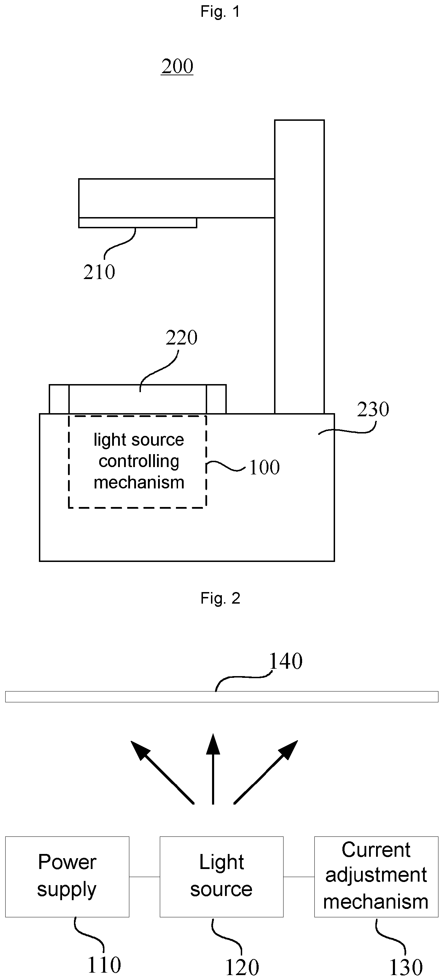

Please refer to Fig. 1, the embodiment of the present disclosure provides a three-dimensional printing device 200. The three-dimensional printing device 200 may include a 3D printer for curing a printing material to obtain a printed object, or may further include at least one of a pick-up machine for taking down the printed object from the 3D printer, a washing device for cleaning the printed object taken down, a photocuring machine for re-curing the printed object, etc., which is not limited herein.

In one embodiment, the 3D printer may comprise a material tray 220, a forming platform 210, a light source controlling mechanism 100, etc., and a chassis 230 for mounting the above components. The material tray 220 is configured to hold a printing material. The printing material in the present disclosure may be a liquid photocurable material, which is cured by irradiation of light of a certain wavelength, so as to form a solid printed object with a certain intensity, such as a visible light curable material or an ultraviolet light curable material, and specifically may be a photosensitive resin. The forming platform 210 is located at one side of the material tray 220, and is lifted up or lowered under the control, so that a forming surface of the forming platform 210 is immersed in or removed from the printing material hold in the material tray 220. The light source controlling mechanism 100 may be located on the side of the material tray 220 facing away from the forming platform 210, and is configured to emit a light to the side of the material tray 220, so that the printing material is cured layer by layer on the forming surface of the forming platform 210 under the irradiation of light, thereby obtaining a printed object.

Further refer to Fig. 2, in one embodiment, the light source controlling mechanism 100 may include a selective light-transmitting display 140 and a light source 120.

The selective light-transmitting display 140 may be provided on the side of the material tray 220 facing away from the forming platform 210, and is located between the material tray 220 and the light source 120. When 3D printing is performed, light emitted by the light source 120 passes through the selective light-transmitting display 140 and then irradiates on the printing material in the material tray 220, so that the printing material is cured on the forming platform 210.

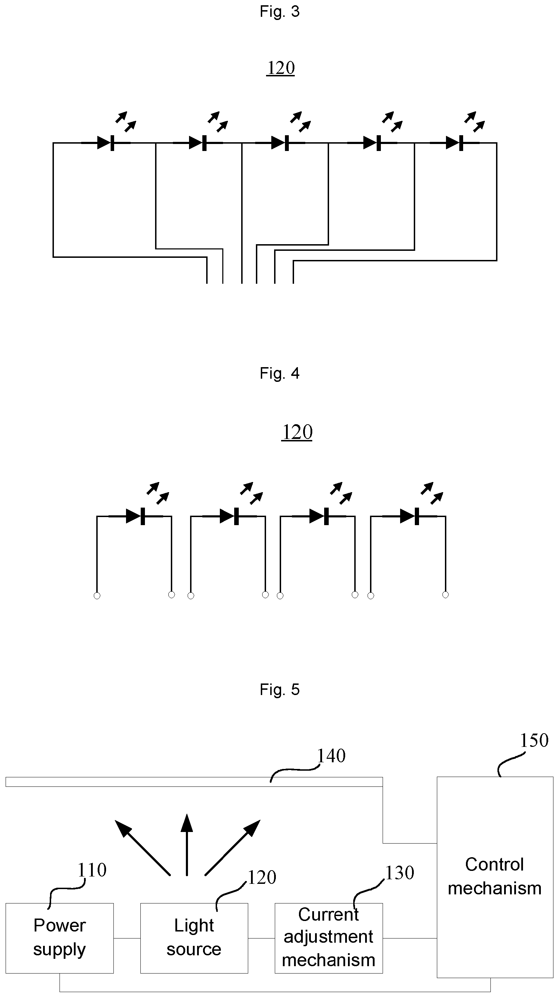

For example, the light source 120 may include a plurality of LED lamp sets capable of emitting visible light and/or ultraviolet light, and each of the LED lamp sets may include one LED or a plurality of LEDs, which is not limited herein. The light source 120 may be a common LED light source or a COB light source, and the light source 120 may be one of various types of LED light sources with an optical lens. Accordingly, when the light source 120 is a common LED light source, the LED lamp set may comprise one or more LEDs; and when the light source 120 is a COB light source, each LED lamp set may comprise one COB chip, and in this case, each LED lamp set may comprise a plurality of LEDs. Referring to Figs. 3 and 4, Fig. 3 shows an architecture of a common LED light source constituting the light source 120 provided in the present disclosure, and Fig. 4 shows an architecture of a COB light source constituting the light source 120 provided in the present disclosure. The light source 120 constituted by the common LED light source may include a plurality of common LEDs, and the plurality of common LEDs may be connected in series or in parallel. The light source 120 composed by the COB light sources may include a plurality of COB light sources, and the plurality of COB light sources may be connected to each other independently.

Further, the selective light-transmitting display 140 can selectively allow light to pass, for example, the selective light-transmitting display 140 may transmit light in all regions or selectively partial regions according to slice data corresponding to the printing task, and certainly may not transmit light. For example, during the operation of the 3D printer, the plurality of LED lamp sets included in the light source 120 emit light towards the selective light-transmitting display 140, and the selective light-transmitting display 140 is light-transmissive in all regions or partial regions, so that light emitted by the plurality of LED lamp sets are at least partially radiated onto the printing material hold in the material tray 220, so that the printing material is cured and shaped. For example, the selective light-transmitting display 140 may be an LCD or other screens having similar functions, which is not limited herein.

In one embodiment, the selective light-transmitting display 140 may be an LCD, and the 3D printer is an LCD 3D printer, and has many advantages. First, the price is inexpensive. It can be understood that the core imaging components of the LCD 3D printer are the LED light source and the LCD, which are both relatively inexpensive with respect to the optical machine of the DLP 3D printer or the laser scanner of the SLA 3D printer. Secondly, the architecture is simple. The core structure of the LCD 3D printer is a lead screw which drives the forming platform 210 to perform printing on the LCD; however, in a DLP 3D printing technology, light emitted by an LED optical device irradiates onto a digital micro-mirror (DMD) for reflection, and then imaging is performed; in addition, in the SLA 3D printing technology, imaging is performed by means of the laser scanner, and in contrast, the architecture of the LCD 3D printer is relatively simple. Further, the resolution is high. Currently, the displays of LCD 3D printers available on the market all have a resolution of 4k, while the printer under development or pre-sale have a resolution of around 6-8k, and even 10k; compared with achieving a 4k resolution by jitter imaging in the DLP 3D printers, the resolution of the LCD 3D printers is very high.

However, although the LCD has good performance, the LCD 3D printing technology still has some disadvantages, for example, the LCD has a short service life, and thus a user needs to replace the LCD regularly or irregularly when using the LCD 3D printer; secondly, the light transmittance of the LCD is not high, which affects the quality of curing the printed material during printing.

In order to understand the technical solutions of the present disclosure more clearly, the light emitting principle of the LED and the working principle of the LCD are briefly described herein.

An LED is a semiconductor component which emits light by means of a semiconductor substance, and is P-N conjunction structure of a semiconductor. The light emitting process of the LED comprises: forward voltage, recombination radiation and light energy transmission. The forward voltage is a voltage externally applied between positive and negative terminals of an LED. The forward voltage enables electrons in a semiconductor to change from a base state to an excited state. Due to the instability of electrons in the excited state, after a short time of period, they will return to the base state without external excitation; the electrons and holes are recombined, photons with an energy of hv-Eg are released, and the photons are transferred to the outside of the LED by means of a clean epoxy resin.

LEDs have a forward current-voltage characteristic, and at a low forward bias voltage, the current of the light emitting diode is mainly a non-radiative recombination current, which is mainly caused by surface recombination around an LED chip. At a high forward bias voltage, the current of the light emitting diode dominates the radiative diffusion. At a higher bias voltage, the total current of the light emitting diode, which would be limited by the current limiting resistor, may be written as:

$$I = I_d exp\left[\frac{q(V-IRs)}{kT}\right] + I_r exp\left[\frac{q(V-IR_s)}{2kT}\right]$$

in the above formula, I is a current of a light-emitting diode of an LED, $I_d$ and $I_r$ are saturation currents caused by a diffusion current and a recombination current, respectively, V is the voltage of the light emitting diode, RS is the resistance value of a series resistor, q is a charge quantity, T is the temperature, and k is a Boltzmann constant.

It can be determined from the above formula that the recombination current is closely related to the current flowing through the LED, and the recombination current may be controlled by controlling the current of the LED, thereby controlling the number of photons, and achieving the purpose of controlling the brightness of the LED.

Further, in the present embodiment, the plurality of LED lamp sets of the light source 120 of the LCD 3D printer may all be UV LED lamp sets, and the light source 120 mainly uses a UV LED light-emitting body having a wavelength of around 405 nm to emit light. It is not limited to 405 nm wavelength, and may also be UV light of various wavebands, such as 385 nm and 365 nm.

As the LCD has many complex internal structures, the complex structures usually need to be bonded by an adhesive, and the adhesive is usually an organic adhesive; however, the organic adhesive has poor durability against UV light. In an LCD 3D printer, when an LCD operates, if a corresponding pixel point is black, i.e. light is not transmitted, a corresponding polarizer is in a closed state, and in this case, all UV light irradiated by the light source 120 is absorbed by the interior of the pixel, which can accelerate the aging of the adhesive and cause the LCD to fail, thereby shortening the service life of the LCD.

In an LCD 3D printer, the light consistency of UV light irradiated on a projection surface (i.e. the surface of the LCD facing away from the light source 120), i.e. UV light emitted by the light source 120 and passing through the LCD, will affect the overall consistency of a finally obtained printed object, thereby affecting the 3D printing effect; therefore, the light consistency of the light projected by the light source 120 on the projection surface is crucial to the LCD 3D printer.

With regard to the light source 120 composed of common LED light sources, the doping concentrations of different LED individuals are different, and the doping concentrations have an influence on the recombination current generated by holes and electrons; and therefore, even if the currents applied to various LEDs are the same, the luminous intensities of different LEDs are still different individually. For example, the illumination intensity of light emitted by the light source 120 and passing through the LCD is different, so that the light consistency cannot meet the use requirement. In addition, the light source 120 composed of COB light sources also has a similar problem. Although the semiconductor doping concentrations of LEDs in COBs produced in the same batch are the same, there is still a difference in the doping concentration of individual semiconductors of LEDs not in the same COB, and similarly, there is also an individual difference in the luminous intensity of the light source 120 composed of the COB light sources.

In the related art, in order to solve the described problem, the light fluxes of projection surfaces of an LCD are adjusted by adjusting light transmittances of pixel points of the corresponding LCD, so that the light fluxes of the projection surfaces are uniform, thereby controlling consistency of the light transmitting through the LCD, and achieving the purpose of light consistency. Specifically, for example, when the light intensity is strong in some regions of the projection surface, while the light intensity is weak in other regions, corresponding pixel points are controlled to operate so as to turn off the polarizer. In this case, the corresponding UV light needs to be absorbed by the pixels, so as to reduce the illumination intensity of these regions, thereby achieving the purpose of light consistency. However, on the one hand, in this manner, since part of the UV light will be absorbed by the LCD itself, light consistency is realized at the expense of the light transmittance of the LCD, which reduces the illumination intensity of the projection surface to some extent, thereby affecting the printing quality; on the other hand, this manner may accelerate the aging of the adhesive and cause the LCD to fail, shortening the service life of the LCD, thereby bringing inconvenience to the user, and increasing the usage cost of the user.

With further reference to Fig. 2, the light source controlling mechanism 100 in the present embodiment may further include a power supply 110 and a current adjustment mechanism 130. The power supply 110 and the current adjustment mechanism 130 may both be electrically connected to the light source 120, wherein the power supply 110 may be configured to supply a current to the LED lamp set 121, and the current adjustment mechanism 130 may adjust a driving current of the LED lamp set 121.

In another embodiment, referring to Fig. 5, the light source controlling mechanism 100 may further comprise a control mechanism 150; the control mechanism 150 may be electrically connected to the selective light-transmitting display 140, the power supply 110 and the current adjustment mechanism 130, and is configured to control these mechanisms to execute tasks. For example, the control mechanism 150 is configured to control the selective light-transmitting display 140 to perform selective light transmission according to slice data corresponding to the printing task, to control the power supply 110 to supply a current to the light source 120, or to control the current adjustment mechanism 130 to adjust a driving current of the LED lamp set of the light source 120, etc.

It should be noted that, the control mechanism 150 is not limited to control the described mechanisms. In some application scenarios, the control mechanism 150 may also be configured to control the forming platform 210 of the 3D printer to move up and down, and to control the pick-up mechanism to pick-up a printed object, to control a washing device to clean, and to control a curing machine to cure, etc.

For example, the light source controlling mechanism 100 of the three-dimensional printing device 200 in the above embodiments can adjust the light consistency or the like by the following method for controlling the light source 120.

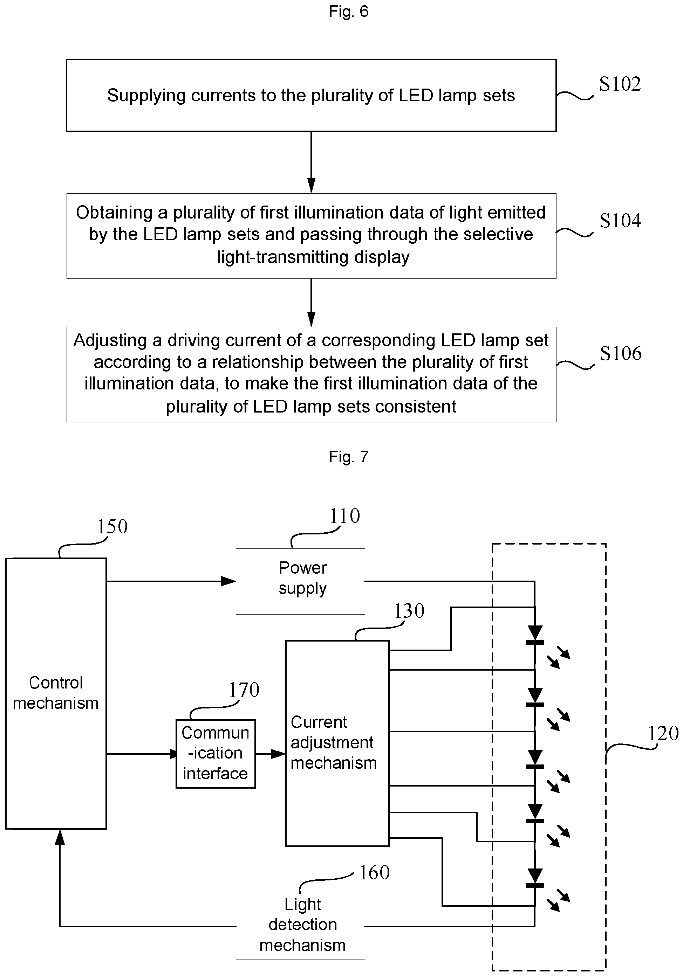

As an implementation, referring to Fig. 6, the method for controlling the light source 120 of the three-dimensional printing device 200 may include:

S102: supplying currents to a plurality of LED lamp sets.

It can be understood that, before the light consistency is adjusted, the light source 120 needs to be energized to emit light, so as to emit light to the LCD. For example, in the present embodiment, currents of the same magnitude may be supplied to each LED lamp set, and certainly, in other embodiments, currents of different magnitudes may also be supplied to different LED lamp sets according to requirements. The value of current supplied to the LED lamp sets may be set according to actual conditions. In some application scenarios, a required illumination intensity value may be set on a corresponding control software, and the control mechanism 150 may determine, according to the illumination intensity value, a current required to be supplied to the LED lamp set, so as to control the power supply 110 to supply power to the plurality of LED lamp sets.

Further, the present disclosure does not limit that the current provided to the LED lamp set is a constant current or a non-constant current. In the present embodiment, a constant current may be supplied to a plurality of LED lamp sets. The constant current has a constant current value, that is to say, the plurality of LED lamp sets may all be driven by a constant current.

For example, the power supply 110 may be a constant current source, and the constant current may be provided by the constant current source. Specifically, the constant current source may provide a constant current for various LED lamp sets under the control of the control mechanism 150, so that the various LED lamp sets emit light to the LCD under the control of the control mechanism 150. In other application scenarios, the constant current may also be provided by a power supply other than the light source controlling mechanism 100 or the three-dimensional printing device 200, which is not limited herein.

For example, the constant current source may include a DC-DC or AC-DC power supply 110 converter, such as a topological converter, for example, Buck, Boost, Buck-Boost, Flyback and LLC. Further, in the present embodiment, the communication manner between the control mechanism 150 and the constant current source may be at least one of an Inter Integrated Circuit (IIC) bus protocol, a Universal Asynchronous Receiver/Transmitter (UART), a Pulse Width Modulation (PWM), a Serial Peripheral Interface (SPI), etc., so as to achieve the control of the constant current source by the control mechanism 150, and in particular, may control the magnitude and the on/off time of the constant current, etc.

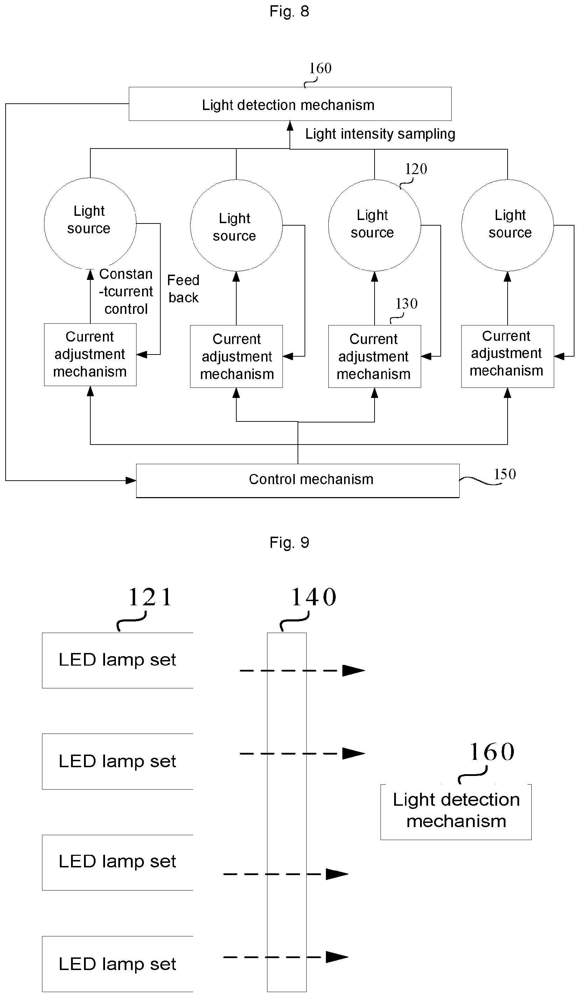

Still further, in conjunction with Figs. 7 and 8, the present embodiment does not limit the control method for different light sources 120. For example, when the light source 120 is composed of common LED light sources, the number of the constant current sources (i.e. the power supply 110) may be one, and one constant current source may independently control a plurality of LEDs or a plurality of LED lamp sets; in addition, when the light source 120 is composed of COB light sources, the number of constant current sources may be the same as the number of COB chips, and the constant current sources are respectively connected to the plurality of COB chips in a one-to-one correspondence to perform independent control, i.e. the constant current of the plurality of COB chips can be controlled independently and precisely according to the actual conditions of different COB chips. Of course, in other embodiments, when the light source 120 is composed of common LED light sources, a plurality of constant current sources may also be provided to independently and precisely control the LED lamp sets, which is not specifically limited herein.

It can be understood that, a constant current source is provided to control a driving current of a plurality of LED lamp sets, so that the current flowing through the plurality of LED lamp sets is constant; and in cases where the current is constant, the recombination current of the LEDs is determined, thus the emitted photons of the LED are determined, and therefore the illumination intensity is a constant value, which ensures to realize the light consistency of a projection surface.

S104: obtaining a plurality of first illumination data of light emitted by the LED lamp sets and passing through the selective light-transmitting display 140.

As stated above, after a constant current is supplied to the LED lamp sets 121, the LED lamp sets 121 may emit light towards the LCD, and the LCD needs to be turned on to be in a full-through state, so that light emitted by the LED can transmit through the entire printing region of the LCD, and the light source 120 is controlled for the entire printing region of the LCD.

It should be noted that, the light source 120 comprises a plurality of LED lamp sets, and the plurality of first illumination data herein refers to a plurality of illumination data corresponding to each LED lamp set of the plurality of LED lamp sets after passing through the LCD.

For example, the first illumination data may include an illumination intensity, or may include other parameters, such as at least one of a luminosity, a luminous flux, a brightness, a grayscale and a color gamut, which can be associated with the illumination intensity, which is not limited herein.

Further, in an embodiment, referring to Fig. 9, in order to obtain the first illumination data of the light emitted by each LED lamp set 121 and passing through the LCD, the light source controlling mechanism 100 may further include a light detection mechanism 160, and the light detection mechanism 160 may be associated with the control mechanism 150 and is configured to detect the plurality of first illumination data corresponding to each LED lamp set 121.

For example, at least when the first illumination data is obtained, the light detection mechanism 160 may be located on the side of the LCD away from the plurality of LED lamp sets 121.

The light detection mechanism 160 may be at least one of a photosensitive resistor, a photodiode (such as a UV LED photodiode), a photoelectric sensor, a photometer, an integrating sphere, a camera, or other light detection devices, that is, detection is performed by using one of the light detection devices, or detection is performed by means of a combination of two or more of the light detection devices. For example, when the light detection mechanism 160 is a photometer, the photometer may be connected to the control mechanism 150 by means of a USB, or may be connected in other manners. After the photometer detects the illumination intensity of light of the LED lamp set 121 passing through the selective light-transmitting display 140, the illumination intensity may be fed back to the control mechanism 150 by means of a USB, or may be displayed in a certain manner, so that an operator can know the illumination intensity. When the light detection mechanism 160 is a camera, the camera may be spaced apart from the selective light-transmitting display 140 and may be mounted above the selective light-transmitting display 140. When the first illumination data needs to be obtained, a picture of light passing through the selective light-transmitting display 140 may be taken, and then information, such as the gray scale and the brightness in the picture are extracted to obtain first illumination data corresponding to each lamp set, and the information is fed back to the control mechanism 150, or is displayed in a certain manner, so that the operator can know. Furthermore, when the light detection mechanism 160 is a camera, a filter or a coating film may be added to the camera to protect the camera, so as to prevent light from damaging the camera.

In an embodiment, the light detection mechanism 160 may collect the first illumination data of all the LED lamp sets 121 at one time, or may obtain only the first illumination data of one or some of the LED lamp sets 121 at one time, which needs to perform acquisition multiple times, and it is not limited herein.

In a specific application scenario, the light detection mechanism 160 may include a single or a plurality of acquisition ends, and the LCD may be a planar light-transmitting display. When the light detection mechanism 160 comprises a plurality of acquisition ends, the number of the plurality of acquisition ends may be the same as the number of the plurality of LED lamp sets 121, and each acquisition end may correspondingly collect the illumination intensity of one LED lamp set 121, so that all the first illumination data can be obtained at one time; when the light detection mechanism 160 comprises one acquisition end, the light intensity of each LED lamp set 121 may be collected successively by using the one acquisition end; certainly, in some application scenarios, although the light detection mechanism 160 only comprises one acquisition end, the acquisition end may achieve obtaining the first illumination data of the plurality of LED lamp sets 121 in a single acquisition, which may be specifically selected according to an actual situation, and is not limited herein.

In an application scenario, the light detection mechanism 160 comprises an acquisition end; the LCD uses a planar light-transmitting display; the plane formed by the plurality of LED lamp sets 121 of the light source 120 is parallel to a plane of the LCD; and the acquisition end may, at different regions, obtain the illumination intensities of different LED lamp sets 121. For example, the area of the acquisition end may be equal to the area of the selective light-transmitting display 140, and different regions of the acquisition end respectively correspond to different LED lamp sets 121.

In an embodiment, the light detection mechanism 160 may not be a part of the light source controlling mechanism 100, but may be an external component. When the first illumination intensity data needs to be obtained, the light detection mechanism 160 is connected to the control mechanism 150 by means of a USB or a type-C, and may be unplugged after use.

S106: adjusting driving currents of the plurality of the LED lamp sets according to a relationship between the plurality of pieces of first illumination data, to make the plurality of pieces of the first illumination data of the plurality of LED lamp sets consistent.

As stated above, due to the difference in doping concentration of semiconductors, even if the currents supplied to each LED lamp set in step S102 are the same, the illumination intensity corresponding to each LED lamp set may still have a certain difference, and the illumination intensity of the light, after the light passes through the LCD, also has a difference; in order to reduce the adverse impact of such differences on the quality of photocuring, the driving current of the corresponding LED lamp set may be adjusted, so that the illumination intensities corresponding to the plurality of LED lamp sets are consistent, and the illumination intensities after light passing through the LCD are also consistent, so as to meet the requirement of light consistency.

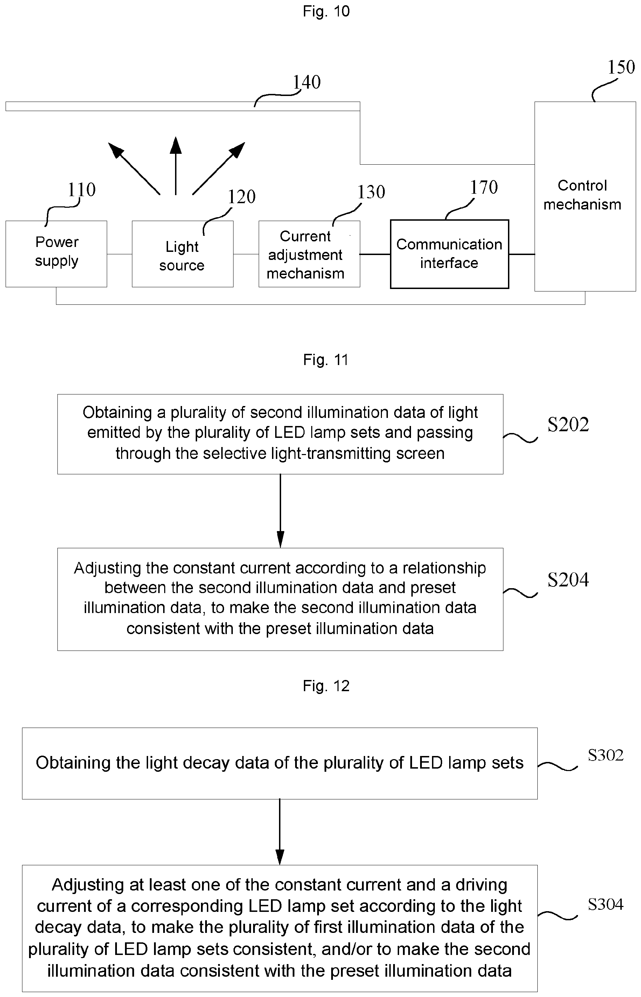

The driving currents of the LED lamp sets may be adjusted by the current adjustment mechanism 130. For example, the number of the current adjustment mechanisms 130 may be one or more, and one or more current adjustment mechanisms 130 can be electrically connected to the plurality of LED lamp sets 121 respectively, and the driving currents of the corresponding LED lamp sets can be independently adjusted according to the relationship between the plurality of first illumination data of the plurality of LED lamp sets under the control of the control mechanism 150, so that the plurality of first illumination data of the plurality of LED lamp sets are consistent. For example, as an optional implementation, referring to Fig. 10, the light source controlling mechanism 100 may further comprise a communication interface 170, and the control mechanism 150 is connected to the current adjustment mechanism 130 by means of the communication interface 170. In some embodiments, the control mechanism 150 and the communication interface 170 communicate in an IIC, UART, PWM or SPI manner.

In another application scenario, the current adjustment mechanism 130 of the light source controlling mechanism 100 of the present disclosure may also not be connected to the control mechanism 150. For example, an operator may manually control the corresponding current adjustment mechanism 130 according to a relationship between the plurality of pieces of first illumination data, so as to adjust a driving current of a corresponding LED lamp set.

In an embodiment, the current adjustment mechanism 130 may comprise a drive circuit. In an implementation, there may be a plurality of drive circuits, so that each drive circuit may adjust the current of one LED lamp set 121, or there may be only one drive circuit, and the drive circuit may be connected to different LED lamp sets, so as to adjust the driving currents of different LED lamp sets.

In a specific implementation, each LED lamp set 121 may be independently electrically connected to the current adjustment mechanism 130, so that the current adjustment mechanism 130 can independently control a driving current of each LED lamp set, for example, when the illumination intensity of a first LED lamp set is weak, the driving current of the first LED lamp set is increased, and the driving currents of other LED lamp sets remain unchanged. As another alternative embodiment, when the illumination intensity of the second LED lamp set is relatively high, the driving current of the second LED lamp set is reduced, and the driving currents of the other LED lamp sets remain unchanged, and so on.

In addition, there may be one or more LED lamp sets needing to be adjusted; when there is only one LED lamp set needing to be adjusted, the driving current of the LED lamp set is directly adjusted by means of the current adjustment mechanism 130; when there are a plurality of LED lamp sets needing to be adjusted, the adjustment amplitude of each LED lamp set may be the same or different; and accordingly, under the control of the control mechanism 150, the current adjustment mechanism 130 precisely and independently adjusts the driving current of each LED lamp set according to the needing adjustment amplitude of each LED lamp set, thus, the first illumination data corresponding to each LED lamp set meets the requirements.

Further, as stated above, one LED lamp set may include one LED or a plurality of LEDs. When one LED lamp set comprises one LED, it can be understood that each LED has a corresponding current adjustment mechanism 130 for adjusting a driving current, so that independent control of each LED can be achieved; when one LED lamp set comprises a plurality of LEDs, the current adjustment mechanism 130 may adjust the plurality of LEDs located in the same region and in the same LED lamp set, so that the LEDs can be controlled in different regions; certainly, in some application scenarios, the plurality of LEDs of the same LED lamp set may also not be located in the same region, which is not specifically limited herein.

Please continue to refer to Figs. 7 and 8, when the light source 120 is composed of common LED light sources, one terminal of the current adjustment mechanism 130 is connected to the control mechanism 150 by means of the communication interface 170, and is further connected to each LED respectively, so as to independently and precisely adjust the driving current of each LED by means of the current adjustment mechanism 130 under the control of the control mechanism 150; in addition, when the light source 120 is composed of COB light sources, the number of the current adjustment mechanisms 130 may be the same as the number of COB chips, and the current adjustment mechanisms 130 are respectively connected to the plurality of COB chips in a one-to-one correspondence, so as to perform independent driving current adjustment on each COB chip, i.e. the constant current of each COB chip can be controlled independently and precisely according to the actual conditions of different COB chips.

It should be noted that, the consistency of the first illumination data herein is not limited to that values corresponding to each first illumination data are equal, it may refer to that, in all the first illumination data, a difference value between values corresponding to any two of first illumination data is within a certain range. For example, the difference between the two may be within a small range, for example, the range may allow that the curing quality of the printed object obtained by performing curing under the corresponding illumination is not affected, or if there is, it is within an acceptable range. In addition, as stated above, the first illumination data is data capable of reflecting the illumination intensity of a corresponding LED lamp set, and when the plurality of pieces of first illumination data of the plurality of LED lamp sets of the light source 120 are consistent, the illumination intensity obtained after light emitted by the light source 120 passes through the LCD is also consistent, thereby satisfying the requirements of light consistency.

In the method above, on the one hand, a driving current of each LED lamp set can be precisely and independently adjusted by means of a current adjustment mechanism 130 according to a plurality of pieces of first illumination intensity data of various LED lamp sets, so as to achieve independent and precise control over a single LED (if each LED corresponds to one pixel of the LCD, pixel-level control can be realized) or LEDs in a region, and further make first illumination data of the LED lamp sets consistent by means of feedback, so that the consistence of emergent light is better, the independence and accuracy of adjustment are higher, and thus the light consistency of a light source 120 at a projection plane can be improved; on the other hand, by adjusting the light consistency in this manner, compared with the manner of achieving uniform light by selecting a selectively light-transmitting display 140 in the related art, it is not necessary to use the pixel points in the selectively light-transmitting display 140 for absorbing the ultraviolet light emitted by the light source 120, so that the aging time of the adhesive in the selective light-transmitting display can be greatly prolonged to some extent, thereby prolonging the service life of the selective light-transmitting display; in still another aspect, compared with the described related art, it is not necessary to absorb UV light by means of the selective light-transmitting display to perform light consistency, so that the aging time of the adhesive in the selective light-transmitting display 140 can be greatly prolonged to some extent, thus, the service life of the selectively translucent display 140 is prolonged, especially for the short service life of the LCD of the current LCD 3D printers, which undoubtedly addresses a big pain point in the industry; on the other hand, compared with the described related art, it is not necessary to absorb the UV light through the LCD to perform light consistency, so that the luminous flux of the LCD can be improved to some extent, the light transmittance of the LCD is further improved, and the printing quality of the three-dimensional printing device 200 is improved.

In addition, in an embodiment, when the light source 120 is controlled, a combination of the above precise control method and the method of light absorption by the LCD itself as described in the related technology may also be employed. Compared with the method in which the LCD completely absorbs light by itself, only a small amount of adjustment of the luminous flux of the LCD is required, and thus, compared with the method in which the LCD completely absorbs light in the related art, the aging of the adhesive inside the LCD can still be reduced, and the service life of the LCD is prolonged; only a small amount of light flux of the LCD needs to be sacrificed, so that the light transmittance of the LCD can be improved to some extent.

Further, in the step of adjusting the driving current of the corresponding LED lamp set according to the relationship between the plurality of pieces of first illumination data of the plurality of LED lamp sets, the relationship between the plurality of pieces of first illumination data of the plurality of LED lamp sets may be known as larger or smaller, or stronger or weaker, or higher or lower.

Specifically, for example, the first illumination data may be an illumination intensity, when at least some of the first illumination intensities corresponding to the plurality of pieces of first illumination data are not equal, the difference in the plurality of first illumination intensities can be reduced by increasing the driving current of the LED lamp set with a lower first light intensity and/or decreasing the driving current of the LED lamp sets with a higher first light intensity, so that the illumination intensity of light projected by the light source 120 onto the projection surface is consistent. That is to say, the values of the plurality of first illumination intensities may be different, and during adjustment, the driving current corresponding to the LED lamp set with the corresponding lower first illumination intensity may be adjusted to be larger, to increase the illumination intensity, and the driving current corresponding to the LED lamp set with the corresponding higher first illumination intensity may also be adjusted to be smaller, to reduce the first illumination intensity, as long as the first illumination intensities of the plurality of LED lamp sets are consistent.

In this way, the light source 120 control method provided in the present disclosure can adjust the light consistency more flexibly. In the related art, the light consistency is adjusted by absorbing light by the selective light-transmitting display 140 itself, when the light consistency is adjusted in this manner, it can only be achieved by adjusting the illumination intensity of the region with a relatively high illumination intensity to be lower, however, the region with a relatively low illumination intensity cannot be adjusted to be higher. That is to say, this method for adjusting light consistency needs to be performed at the expense of the light transmittance of the selectively translucent display 140. However, the selective light-transmitting display 140, such as an LCD, has a lower transmittance due to the limitations of their own structure, which is one of the significant factors affecting the quality of 3D printing. Consequently, this can further affect the quality of 3D printing. However, in the described method of the present disclosure, by precisely adjusting and controlling the driving current of a corresponding LED lamp set, the driving current corresponding to the corresponding LED lamp set with a relatively high illumination intensity may be adjusted to be lower to decrease the illumination intensity, furthermore, the driving current corresponding to the LED lamp set with a relatively low illumination intensity may also be adjusted to be higher, to increase the illumination intensity, from this aspect, when the light consistency is adjusted in the method above in the present disclosure, the method for achieving the light consistency by adjusting the driving currents of some LED lamp sets does not need to sacrifice the light transmittance of the selective light-transmitting display 140, thus, compared with the solution in the related art, the light transmittance of the selective light-transmitting display 140 can be improved to some extent, so as to improve the printing quality of the three-dimensional printing device 200.

Further, when adjusting and controlling the light source 120, in addition to considering the light consistency, the illumination intensity also needs to be considered, i.e. the illumination intensity of light emitted by the light source 120 after passing through the selective light-transmitting display 140 needs to meet certain requirements, for example, needs to be greater than a preset threshold, so as to ensure the printing quality of the three-dimensional printing device 200. On this basis, referring to Fig. 11, the method for controlling the light source 120 of the three-dimensional printing device 200 may further include:

S202: obtain a plurality of second illumination data of light emitted by the plurality of LED lamp sets and passing through the selective light-transmitting display 140.

It should be noted that the second illumination data may be the same as or different from the first illumination data, and may specifically be all the illumination data of the light emitted by all the LED lamp sets of the light source 120 and passing through the selective light-transmitting display 140; in an application scenario, this step may be performed after the consistency adjustment is completed, and therefore, the first illumination data corresponding to each LED lamp set is consistent, and thus, the second illumination data may also be illumination data corresponding to a single LED lamp set, which is not limited herein.

Similar to the foregoing first illumination data, both the second illumination data and the preset illumination data herein may include the illumination intensity, or may include other parameters, such as at least one of an illumination, a luminous flux, a brightness, a grayscale and a color gamut, which can reflect the illumination intensity, which is not limited herein. Correspondingly, the method for obtaining the second illumination data may also be the same as that of the first illumination data. Specifically, the second illumination data may be obtained by the light detection mechanism 160, and then the illumination intensity detection data may feed back the obtained second illumination data to the control mechanism 150, or display in a certain manner, so that an operator can know. The specific implementation of the light detection mechanism 160 obtaining the second illumination data may be the same as that described above, which is not repeated herein. It should be additionally noted that, in this manner, the light detection mechanism 160 may also directly obtain overall illumination data of the light emitted by all the LED lamp sets of the light source 120 and passing through the selective light-transmitting display 140.

S204: adjusting constant current according to a relationship between the second illumination data and preset illumination data, to make the second illumination data consistent with the preset illumination data.

The preset illumination data may be illumination data determined according to the specific components of the three-dimensional printing device 200, the specific requirement on printing quality, etc., that is to say, for the different three-dimensional printing devices 200, preset illumination data corresponding to different printed objects may be different and may also be the same, which is not limited herein.

It should be noted that, the second illumination data mentioned herein is consistent with the preset illumination data, which is not limited to that the value corresponding to the second illumination data is equal to the value corresponding to the preset illumination data, and it possibly refers to that the difference between the two is within a certain range, specifically, the difference between the two is within a small range, for example, the range can allow that the curing quality of the printed object obtained by performing curing under the corresponding illumination is good and meets the user requirement, or if affected, it is within an acceptable range.

In addition, when the constant current is adjusted, the constant current source may be specifically controlled by the control mechanism 150 to perform adjustment, and certainly, the adjustment may also be performed by manually controlling the constant current source by an operator, which is not specifically limited herein.

It should be further noted that, during actual adjustment and control of the light source 120, the light consistency may be adjusted first, or the illumination intensity may be adjusted first, that is, steps S104-S106 may be performed first, followed by steps S202-S204, or steps S202-S204 may be performed first, followed by steps S104-S106, which is not specifically limited herein.

By means of the described method, the second illumination data of the light source 120 is adjusted according to the preset illumination data, so that the illumination condition of light passing through the selective light-transmitting display 140 may be controlled, thereby improving the printing quality of the three-dimensional printing device 200.

In an embodiment, the second illumination data and the preset illumination data both comprise illumination intensity, in this case, when the constant current is adjusted according to the relationship between the second illumination data and the preset illumination data, if the second illumination intensity corresponding to the second illumination data is lower than a preset illumination intensity of the preset illumination data, the constant current may be increased to reduce the difference value between the second illumination intensity and the preset illumination intensity; certainly, in some application scenarios, it may occurs that the second illumination intensity corresponding to the second illumination data exceeds the preset illumination intensity corresponding to the preset illumination data, in this case, the constant current may be decreased to reduce the difference value between the second illumination intensity and the preset illumination intensity, or may not be adjusted according to actual requirements.

It should be noted that, in some application scenarios, according to the light source 120 control method, the light consistency and the illumination intensity can meet the requirements with just one adjustment, while in other application scenarios, the requirements may not necessarily be met after one adjustment, and thus multiple times of adjustment may be required.

Based on this, in an embodiment, during the adjustment, at least one of the plurality of pieces of first illumination data and the second illumination data may be received multiple times by means of cyclic adjustment, that is, besides the foregoing steps S104-S106 and steps S202-S204, at least one of the plurality of pieces of first illumination data and second illumination data is obtained at least once, furthermore, after receiving the plurality of pieces of first illumination data, a driving current of a corresponding LED lamp set is adjusted according to a relationship between the plurality of pieces of first illumination data of the plurality of LED lamp sets; and after receiving the second illumination data, a constant current is adjusted according to a relationship between the second illumination data and preset illumination data.

That is to say, both the foregoing step of adjusting the light consistency and/or the step of adjusting the illumination intensity may be executed multiple times as required, for example, both steps need to be executed for two times, three times, four times, and so on. Certainly, the execution times of the two steps may be the same or different, for example, the light consistency adjustment is executed once, but the illumination intensity adjustment is executed twice, and so on, which are not limited herein. In addition, the order of the steps is not limited. For example, in cases where the light source 120 is connected to the power supply 110, a light consistency adjustment, a illumination intensity adjustment and another light consistency adjustment may be performed in sequence; a light intensity adjustment, a light consistency adjustment and another light intensity adjustment may also be performed in sequence; or a light consistency adjustment, a light intensity adjustment, another light consistency adjustment, and another light intensity adjustment may also be performed in sequence, it may be selected according to an actual adjustment condition, which is not limited herein, as long as both the final light consistency and illumination intensity can meet requirements.

It can be understood that, due to the property of the semiconductor, the light source 120 may have a light decay in the period of emitting light. Therefore, even if the described adjustment of the light source 120 is performed, light decay will still occur after working for a period of time; moreover, for different LEDs or COB chips, due to different manufacturing processes and different batches, situations in which light decay occurs may be different. Based on this, referring to Fig. 12, in an embodiment, the light source 120 control method may further include:

S302: obtain light decay data of the plurality of LED lamp sets.

The light decay data herein may be obtained by using the foregoing method for obtaining the plurality of pieces of first illumination data and the second illumination data. Specifically, the light detection mechanism 160 may be configured to obtain the illumination data of the plurality of LED lamp sets, and then the obtained illumination data may be further compared with previously adjusted illumination data or preset illumination data to obtain the light decay data.

Specifically, the light decay data may be a difference value between a currently measured light intensity and a previously adjusted light intensity or a preset light intensity.

S304: adjusting at least one of the constant current and the driving current of a corresponding LED lamp set according to the light decay data, to make the plurality of first illumination data of the plurality of LED lamp sets consistent, and/or to make the second illumination data consistent with the preset illumination data.

Specifically, after the light decay data of the plurality of LED lamp sets is obtained, it can be determined whether the light source 120 is experiencing light decay wholly or partially, i.e. whether all the LED lamp sets have light decay or only some of the LED lamp sets have light decay. If light decay occurs on the entire light source 120, the constant current of all the LED lamp sets can be adjusted to perform overall compensation, thereby improving the second illumination intensity of the light source 120. If only light decay occurs partially, the driving current of the LED lamp set having light decay can be independently adjusted to perform independent and precise compensation, thereby improving the illumination intensity of a single LED lamp set or a single LED, so as to improve the light consistency.

In addition, in the present embodiment, when the current of the LED lamp set is adjusted for compensation, it can be adjusted manually, and can also be adjusted automatically under the control of the control mechanism 150. The specific adjustment method may refer to the above embodiments, and will not be repeated here.

It should be noted that, the step of performing light decay compensation on the light source 120 may be performed in the 3D printing operation of the three-dimensional printing device 200, and may also be performed before the 3D printing operation is started, which is not limited herein.

By means of the method above, the light decay of an LED may be compensated for the semiconductor characteristics of the LED, thereby further adjusting the light consistency or the overall illumination intensity according to situations, so as to improve the printing quality and printing effect of the three-dimensional printing device 200.

It should be noted that, according to the method for controlling the light source 120 in the foregoing embodiments, the control mechanism 150 may perform control by means of a PID loop or a PID dual-loop control method to obtain the required illumination intensity and light consistency, and control the constant current or driving current of the LED. Furthermore, the control over the independent current of the LED may include, but is not limited to, direct current control, PWM current control, digital current control, discrete component current control, etc.

In addition, in an application example, the light source 120 of the three-dimensional printing device 200 may be controlled by the following steps: 1. setting a required illumination intensity value by means of control software, and supplying power to the light source 120 according to the illumination intensity value; 2. turning on an LCD, so that the LCD is in a full-through state; 3. sampling the illumination intensity of each LED or each LED lamp set, and calculating a difference in terms of light consistency; 4. according to the determined light consistency difference, independently and precisely controlling and adjusting the driving current of a corresponding LED or an LED lamp set, so that the light consistency in a printing region of an LCD meets requirements; 5. determining a difference value between a current illumination intensity and an actual illumination intensity; 6. adjusting, by means of a communication control interface, a current of a constant current source supplied to the light source 120, so as to reach a required illumination intensity value; 7. resampling the illumination intensity of each LED or each LED lamp set, and calculating a difference in terms of light consistency; and 8. according to the determined light consistency difference, independently and precisely controlling and adjusting the driving current of a corresponding LED or LED lamp set, so that the light consistency in a printing region of an LCD meets requirements.

Further, after the light source 120 is adjusted according to the method in the foregoing embodiments, 3D printing may be performed on the basis of the adjusted structure.

The content above merely relates to preferred embodiments of the present disclosure and is not intended to limit the present disclosure. For a person skilled in the art, the present disclosure may have various modifications and variations. Any modifications, equivalent replacements, improvements, etc. made within the spirit and principle of the present disclosure shall all belong to the scope of protection of the present disclosure.

For person skilled in the art, the present disclosure is obviously not limited to the details of the above exemplary embodiments, and the present disclosure can be implemented in other specific forms without departing from the spirit or basic features of the present disclosure. Therefore, the embodiments should be regarded as exemplary and non-restrictive from any point of view, the scope of the present disclosure is defined by the appended claims rather than the above description, and it is therefore intended that meanings of equivalent elements and all changes falling within the scope of the claims should be included within the present disclosure. Any reference signs in the claims shall not be construed as limiting the claims concerned.

**Industrial Applicability**

The solution provided in the embodiments of the present disclosure may be applied to the technical field of light source control. The embodiments of the present disclosure use a three-dimensional printing device comprising a selective light-transmitting display, the first illumination data of the plurality of LED lamp sets is made to be consistent by providing a driving current to a plurality of LED lamp sets comprised in a light source in the three-dimensional printing device; receiving a plurality of pieces of first illumination data obtained after light emitted by the LED lamp sets passes through the selective light-transmitting display; and adjusting a driving current of the corresponding LED lamp sets according to a relationship between the plurality of pieces of first illumination data. In the present disclosure, a driving current of each LED lamp set is precisely and independently adjusted by means of a current adjustment mechanism according to first illumination intensity data of various LED lamp sets, so as to achieve independent and precise control over a single LED or LEDs in a region, and further make first illumination data of the LED lamp sets consistent by means of feedback, so that the consistence of emergent light is better, the independence and accuracy of adjustment are higher, thereby achieving the technical effect of improving the light consistency of a light source at a projection surface; on the other hand, by adjusting the light consistency in this manner, compared with the manner of achieving uniform light by selecting a selectively light-transmitting display in the related art, it is not necessary or only a small amount of the pixels in the selectively light-transmitting display need to absorb the ultraviolet light emitted by the light source, so that the aging time of the adhesive in the selective light-transmitting display can be greatly prolonged to some extent, thereby achieving the technical effect of prolonging the service life of the selective light-transmitting display; in still another aspect, compared with the described related art, it is not necessary to absorb UV light by means of the selective light-transmitting display to perform light consistency, so that the light flux of the selective light-transmitting display can be improved to a certain extent, thereby achieving the technical effects of improving the light transmittance of the selective light-transmitting display, and improving the printing quality of the three-dimensional printing device.

**Claims**

1. A light source controlling method of a three-dimensional printing device, the three-dimensional printing device comprises a selective light-transmitting display, the light source comprises a plurality of LED lamp sets, **characterized in that** the method comprises:

   supplying driving currents to the plurality of LED lamp sets;
   obtaining a plurality of first illumination data of light emitted by the plurality of LED lamp sets and passing through the selective light-transmitting display; and
   adjusting the driving currents of the plurality of LED lamp sets according to a relationship between the plurality of first illumination data, to make the first illumination data of the plurality of LED lamp sets consistent.

2. The light source controlling method as claimed in claim 1, wherein the plurality of first illumination data comprise a plurality of first illumination intensities, and wherein adjusting the driving currents of the plurality of LED lamp sets according to the relationship between the plurality of first illumination data, to make the first illumination data of the plurality of LED lamp sets consistent comprises:
   when at least some of the plurality of first illumination intensities of the plurality of first illumination data are not equal, increasing a driving current of an LED lamp set with a lower first illumination intensity among the plurality of first illumination intensities, and/or decreasing a driving current of an LED lamp set with a higher first illumination intensity among the plurality of first illumination intensities, so as to decrease a difference value between the plurality of first illumination intensities.

3. The light source controlling method as claimed in claim 1, wherein supplying the driving currents to the plurality of LED lamp sets comprises: providing a constant current to the plurality of LED lamp sets; the method further comprises:

   obtaining second illumination data of light emitted by the plurality of LED lamp sets and passing through the selective light-transmitting display; and

adjusting the constant current according to a relationship between the second illumination data and preset illumination data, to make the second illumination data consistent with the preset illumination data.

4. The light source controlling method as claimed in claim 3, wherein the second illumination data comprises a second illumination intensity, the preset illumination data comprises a preset illumination intensity, and wherein adjusting the constant current according to the relationship between the second illumination data and preset illumination data, to make the second illumination data consistent with the preset illumination data comprises:
increasing the constant current when the second illumination intensity of the second illumination data is lower than the preset illumination intensity of the preset illumination data, so as to reduce a difference value between the second illumination intensity and the preset illumination intensity.

5. The light source controlling method as claimed in claim 3 or 4, further comprising:

receiving, at least once, at least one of the plurality of first illumination data and the second illumination data;
wherein after receiving the plurality of first illumination data, adjusting the driving currents of the plurality of LED lamp sets according to the relationship between the plurality of first illumination data of the plurality of LED lamp sets; and
wherein after receiving the second illumination data, adjusting the constant current according to the relationship between the second illumination data and the predetermined illumination data.

6. The light source controlling method as claimed in claim 3 or 4, further comprising:

obtaining light decay data of the plurality of LED lamp sets; and
adjusting at least one of the constant current and the driving currents according to the light decay data, to make the plurality of first illumination data of the plurality of LED lamp sets consistent, and/or, to make the second illumination data consistent with the preset illumination data.

7. The light source controlling method as claimed in claim 1, wherein each of the plurality of LED lamp sets comprises a plurality of LEDs, or each of the plurality of LED lamp sets comprises one LED.

8. A light source controlling mechanism, applied to a three-dimensional printing device, **characterized in that** the light source controlling mechanism comprises:

a selective light-transmitting display, configured to selectively allow a light to pass;
a light source, comprising a plurality of LED lamp sets, wherein the plurality of LED lamp sets are configured to emit light to the selective light-transmitting display;
a power supply, electrically connected to the light source and configured to provide driving currents to the plurality of LED lamp sets;
a current adjustment mechanism, electrically connected to each of the plurality of LED lamp sets and configured to adjust a driving current of a corresponding LED lamp set according to a relationship between a plurality of first illumination data of the plurality of LED lamp sets, to make the plurality of first illumination data of the plurality of LED lamp sets consistent;
wherein the plurality of first illumination data are illumination data of the light projected by the plurality of LED lamp sets and passing through the selective light-transmitting display.

9. The light source controlling mechanism as claimed in claim 8, further comprising a light detection mechanism, wherein the light detection mechanism is configured to detect the plurality of first illumination data of the light projected by the plurality of LED lamp sets and passing through the selective light-transmitting display.

10. The light source controlling mechanism as claimed in claim 9, wherein the light detection mechanism comprises at least one of: a photosensitive resistor, a photodiode, a photosensor, a photometer, an integrating sphere or a camera.

11. The light source controlling mechanism as claimed in claim 8, wherein each of the plurality of LED lamp sets comprises a plurality of LEDs, or each of the plurality of LED lamp sets comprises one LED.

12. The light source controlling mechanism as claimed in claim 8, wherein the power supply is a constant current source and is configured to provide a constant current to the plurality of LED lamp sets.

13. The light source controlling mechanism as claimed in claim 8, wherein when the light source controlling mechanism comprises a plurality of power supplies, the number of the plurality of power supplies is equal to the number of the plurality of LED lamp sets, and the plurality of power supplies are electrically connected to the plurality of LED lamp sets in a one-to-one correspondence.

14. The light source controlling mechanism as claimed in claim 13, wherein the light source is a COB light source, and each of the plurality of LED lamp sets comprises one COB chip.

15. A three-dimensional printing device, **characterized by** comprising a material tray, a forming platform, and the light source controlling mechanism as claimed in any one of claims 8-14, wherein the material tray is configured to hold a printing material, and the printing material is configured to be formed layer by layer on the forming platform under an irradiation of the light source, so as to obtain a printed object.

Fig. 1

<u>200</u>

210

220

light source
controlling
mechanism

100

230

Fig. 2

140

| Power supply | Light source | Current adjustment mechanism |

110

120

130

Fig. 3

<u>120</u>

Fig. 4

<u>120</u>

Fig. 5

Fig. 6

| Supplying currents to the plurality of LED lamp sets | S102 |

↓

| Obtaining a plurality of first illumination data of light emitted by the LED lamp sets and passing through the selective light-transmitting display | S104 |

↓

| Adjusting a driving current of a corresponding LED lamp set according to a relationship between the plurality of first illumination data, to make the first illumination data of the plurality of LED lamp sets consistent | S106 |

Fig. 7

Fig. 8

160

Light detection mechanism

Light intensity sampling

120

| Light source | Light source | Light source | Light source |

Constan
-tcurrent
control

Feed
back

130

| Current adjustment mechanism | Current adjustment mechanism | Current adjustment mechanism | Current adjustment mechanism |

Control mechanism

150

Fig. 9

121

140

160

LED lamp set

LED lamp set

Light detection mechanism

LED lamp set

LED lamp set

Fig. 10

140                                                                                              150

110                                                130              170            Control
                                                                                  mechanism
Power              Light          Current         Communication
supply             source         adjustment      interface
                   120            mechanism

Fig. 11

Obtaining a plurality of second illumination data of light
emitted by the plurality of LED lamp sets and passing          S202
through the selective light-transmitting screen

Adjusting the constant current according to a relationship
between the second illumination data and preset               S204
illumination data, to make the second illumination data
consistent with the preset illumination data

Fig. 12

Obtaining the light decay data of the plurality of LED lamp sets    S302

Adjusting at least one of the constant current and a driving
current of a corresponding LED lamp set according to the light     S304
decay data, to make the plurality of first illumination data of the
plurality of LED lamp sets consistent, and/or to make the second
illumination data consistent with the preset illumination data

## INTERNATIONAL SEARCH REPORT

| International application No. |
| --- |
| **PCT/CN2023/101906** |

**A.  CLASSIFICATION OF SUBJECT MATTER**

B29C64/277(2017.01)i;  H05B45/30(2020.01)i

According to International Patent Classification (IPC) or to both national classification and IPC

**B.  FIELDS SEARCHED**

Minimum documentation searched (classification system followed by classification symbols)

IPC:B29C,H05B

Documentation searched other than minimum documentation to the extent that such documents are included in the fields searched

Electronic data base consulted during the international search (name of data base and, where practicable, search terms used)

CNTXT, ENTXTC, DWPI, CJFD: 3D, 三维, 打印, 均匀, 一致, 透光屏, LED, 电流, 强度, three dimensions, print, uniform, screen, current, intensity

**C.  DOCUMENTS CONSIDERED TO BE RELEVANT**

| Category* | Citation of document, with indication, where appropriate, of the relevant passages | Relevant to claim No. |
| --- | --- | --- |
| PX | CN 115002967 A (GUANGZHOU HIM3D INFORMATION TECHNOLOGY CO., LTD.) 02 September 2022 (2022-09-02)<br>claims 1-15 | 1-15 |
| Y | CN 113352618 A (YOUYOUZAO TECHNOLOGY BEIJING CO., LTD.) 07 September 2021 (2021-09-07)<br>description, paragraph 53-paragraph 78, and figure 1 | 1, 2, 7-15 |
| Y | CN 215704114 U (SHENZHEN ANYCUBIC TECHNOLOGY CO., LTD.) 01 February 2022 (2022-02-01)<br>description, paragraph 22-paragraph 61, and figures 1 and 2 | 1, 2, 7-15 |
| Y | CN 110113835 A (SHENZHEN JPT OPTO-ELECTRONICS CO., LTD.) 09 August 2019 (2019-08-09)<br>description, paragraph 75-paragraph 89, and figure 1 | 1, 2, 7-15 |
| A | CN 112959662 A (SHENZHEN CHUANGBIDE TECHNOLOGY CO., LTD.) 15 June 2021 (2021-06-15)<br>entire document | 1-15 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **22 September 2023** | **23 September 2023** |

| Name and mailing address of the ISA/CN | Authorized officer |
| --- | --- |
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/101906**

### C.    DOCUMENTS CONSIDERED TO BE RELEVANT

| Category* | Citation of document, with indication, where appropriate, of the relevant passages | Relevant to claim No. |
|---|---|---|
| A | CN 111970800 A (SHENZHEN ANYCUBIC TECHNOLOGY CO., LTD.) 20 November 2020 (2020-11-20)<br>    entire document | 1-15 |
| A | CN 111469403 A (GUANGZHOU HIM3D INFORMATION TECHNOLOGY CO., LTD.) 31 July 2020 (2020-07-31)<br>    entire document | 1-15 |
| A | WO 2022110480 A1 (SHENZHEN CREALITY 3D TECHNOLOGY CO., LTD.) 02 June 2022 (2022-06-02)<br>    entire document | 1-15 |

Form PCT/ISA/210 (second sheet) (July 2022)

**INTERNATIONAL SEARCH REPORT**
Information on patent family members

International application No.

**PCT/CN2023/101906**

| Patent document cited in search report | | | Publication date (day/month/year) | Patent family member(s) | | | Publication date (day/month/year) |
|---|---|---|---|---|---|---|---|
| CN | 115002967 | A | 02 September 2022 | None | | | |
| CN | 113352618 | A | 07 September 2021 | None | | | |
| CN | 215704114 | U | 01 February 2022 | None | | | |
| CN | 110113835 | A | 09 August 2019 | WO | 2020192694 | A1 | 01 October 2020 |
| CN | 112959662 | A | 15 June 2021 | None | | | |
| CN | 111970800 | A | 20 November 2020 | None | | | |
| CN | 111469403 | A | 31 July 2020 | WO | 2021253748 | A1 | 23 December 2021 |
| WO | 2022110480 | A1 | 02 June 2022 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210719563